# EUROPEAN PATENT APPLICATION

(11) **EP 4 212 352 A1**
(43) Date of publication of application: **19.07.2023**
(21) Application number: 22179281.5
(22) Date of filing: 15.06.2022
(51) Int. Cl.: B60B 3/00, B60B 3/04

(54) **WHEEL RIM**

(30) Priority: 12.01.2022 TW 111101311
(71) Applicant: Advanced International Multitech Co., Ltd., Kaohsiung City 81260 (TW)
(72) Inventor: HSIAO, Te-Fu, 80457 KAOHSIUNG CITY (TW); KUO, Che-Hao, 81260 KAOHSIUNG CITY (TW); CHANG, Chung-Hsin, 81260 KAOHSIUNG CITY (TW); WANG, Chia-Hsin, 81260 KAOHSIUNG CITY (TW); LIU, Erh-Wei, 81260 KAOHSIUNG CITY (TW)
(74) Representative: Regimbeau

(57) **Abstract**

A wheel rim includes a main body unit (1), angularly spaced-apart fastening units (2), and sealing units (3) corresponding respectively in position to the fastening units (2). The main body unit (1) includes spokes (11) and an outer peripheral wall (12) surrounding the spokes (11) and having radially opposite inner and outer surfaces (12A, 12B). Each fastening unit (2) includes a fastening member (21) that extends through the outer peripheral wall (12) and into a respective one of the spokes (11) for fastening the outer peripheral wall (12) onto the spoke (11), and that has a head (211) disposed outwardly of the outer peripheral wall (12), and a gasket (22) that is clamped between the head (211) and the outer surface (12B) and that is sleeved on the fastening member (21). For each fastening unit (2), the respective sealing unit (3) includes an outer sealing layer (31) adhered on an outer surface of the fastening member (21) and the outer surface (12B) for covering the head (211) and the gasket (22), and an inner sealing layer (32) adhered on and clamped between the outer surface (12B) and the gasket (22).

## Description

The disclosure relates to a wheel rim, and more particularly to a wheel rim with enhanced structure.

Wheels have a long history and occupy a significant place in the mode of transport. They are also important components of an automobile. In general, a wheel includes a conventional wheel rim that connects a wheel axle and a tire that is sleeved on the wheel rim. The conventional wheel rim serves as a skeleton of the wheel for supporting the tire. However, the conventional wheel rim performs poorly in terms of waterproofing, airtight sealing, impact resistance and heat dissipation. In addition, the conventional wheel rim usually includes components made of dissimilar metals, and therefore potential corrosion is more likely to occur, which may adversely affect the structural strength of the conventional wheel rim.

Therefore, an object of the disclosure is to provide a wheel rim capable of alleviating at least one of the drawbacks of the prior art.

According to the disclosure, a wheel rim includes a main body unit, a plurality of fastening units and a plurality of sealing units. The main body unit includes a hub, a plurality of spokes, and an outer peripheral wall. The hub is disposed at a center of the main body. The spokes are angularly spaced apart from one another and extend radially and outwardly from the hub. The outer peripheral wall surrounds the spokes and has an inner surface and an outer surface radially opposite to each other.

The fastening units are mounted on the main body unit, are angularly spaced apart from one another, and correspond respectively to the spokes of the main body unit. Each of the fastening units includes a fastening member and a gasket. The fastening member extends through the outer peripheral wall and into the respective one of the spokes for fastening the outer peripheral wall onto the respective one of the spokes, and has a head disposed outwardly of the outer peripheral wall. The gasket is clamped between the head of the fastening member and the outer surface of the outer peripheral wall and is sleeved on the fastening member. The sealing units correspond respectively in position to the fastening units. Each of the sealing units includes an outer sealing layer and an inner sealing layer. The outer sealing layer is adhered on the outer surface of the outer peripheral wall and the outer surface of a fastening member of one of the corresponding fastening units for covering the head of the fastening member and the gasket of a corresponding one of the fastening units. The inner sealing layer is adhered on the outer surface of the outer peripheral wall and is clamped between the outer peripheral wall and the gasket of the corresponding one of the fastening units.

Other features and advantages of the disclosure will become apparent in the following detailed description of the embodiment with reference to the accompanying drawings, of which:
FIG. 1 is a schematic perspective view of an embodiment of a wheel rim according to the present disclosure;
FIG. 2 is a fragmentary schematic sectional view of the embodiment, illustrating the relationships among elements of the embodiment shown in FIG. 1; and
FIG. 3 is a partly exploded, schematic perspective view of the embodiment.

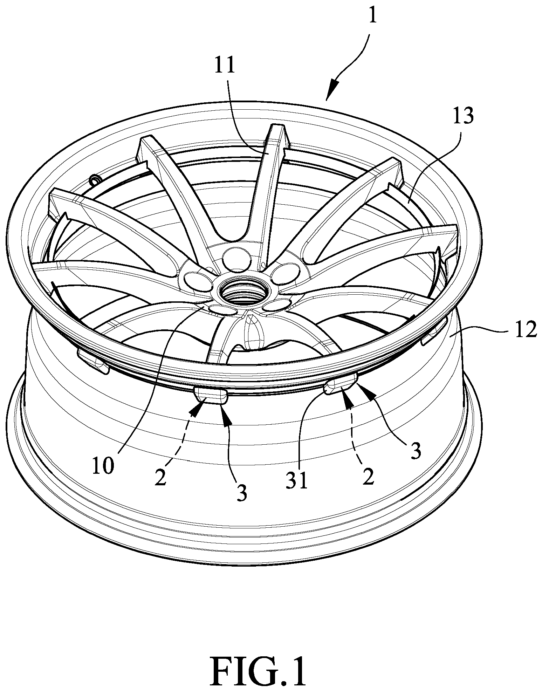

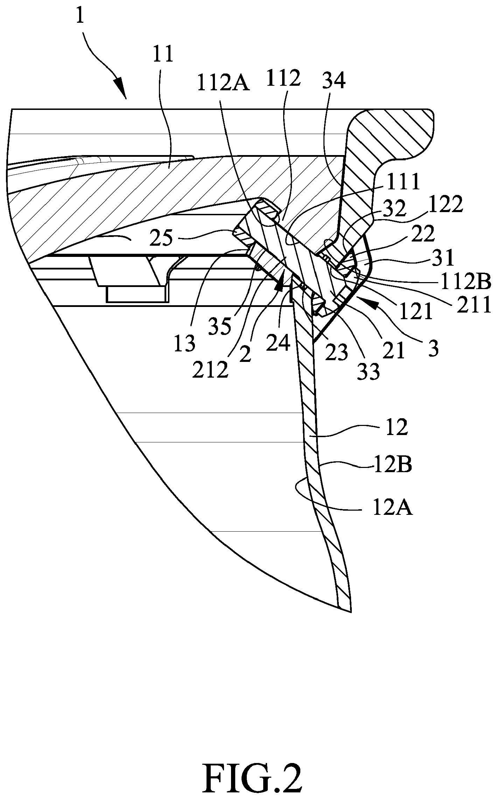

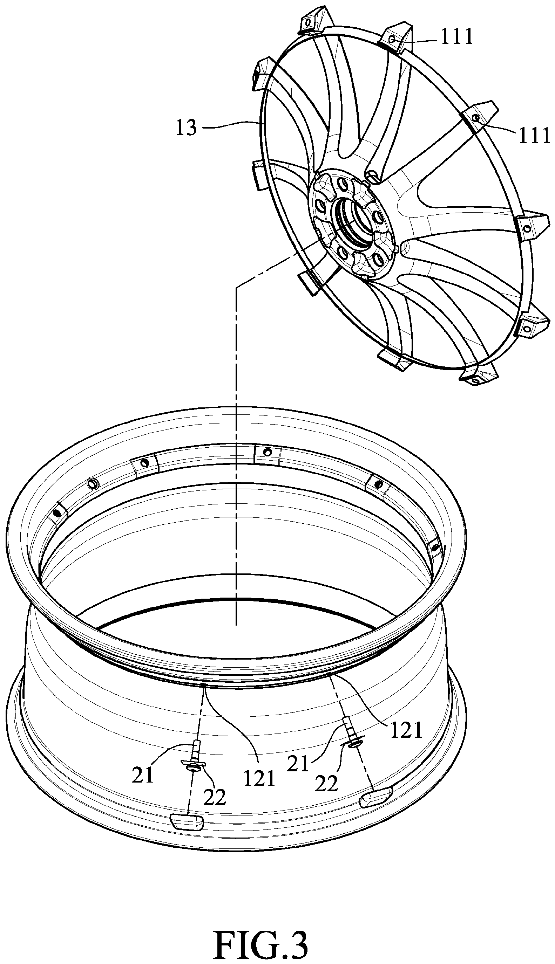

Referring to FIGS. 1 to 3, an embodiment of a wheel rim according to the present disclosure is shown. The wheel rim includes a main body unit 1, a plurality of fastening units 2, and a plurality of sealing units 3 (not shown in FIG. 3). The main body unit 1 includes a hub 10, a plurality of spokes 11, an outer peripheral wall 12 and a reinforcing ring 13. The hub 10 is disposed at the center of the main body unit 1. The spokes 11 are angularly spaced apart from one another, extend radially and outwardly from the hub 10, and are respectively formed with a plurality of through holes 111. Each of the spokes 11 includes a hook portion 112 disposed adjacent to the outer peripheral wall 12 and bent toward the hub 10. The hook portion 112 has an inward surface 112A and an outward surface 112B that are radially opposite to each other, and the outward surface 112B is disposed farther from the hub 10 than the inward surface 112A. The through hole 111 of each of the spokes 11 is formed in the hook portion 112 of the spoke 11 and extends inclinedly from the outward surface 112B into the inward surface 112A of the hook portion 112 toward the hub 10.

The outer peripheral wall 12 surrounds the spokes 11, has an inner surface 12A and an outer surface 12B radially opposite to each other, and is formed with a plurality of openings 121 that correspond in position to and that are in spatial communication with the through holes 111, respectively. Each of the openings 121 extends inclinedly toward the hub 10.

The reinforcing ring 13 abuts against the inward surface 112A of the hook portion 112 of each of the spokes 11, and is made of a material different from that of the spokes 11 and of the outer peripheral wall 12. For example, the reinforcing ring 13 is made of silicon, polytetrafluoroethylene, or fiber composite material to increase the structural strength of the wheel rim.

The fastening units 2 are mounted on the main body unit 1, are angularly spaced apart from one another, and correspond respectively to the opening 121 of the outer peripheral wall 12, and hence correspond respectively to the spokes 11. In the following description, since the structures of the fastening units 2 are identical, only one of the fastening units 2 will be described for the sake of brevity. The fastening unit 2 includes a fastening member 21, a gasket 22, a washer 23, a silicon ring 24, and a nut 25. The fastening member 21 extends through the outer peripheral wall 12 and the hook portion 112 of the respective one of the spokes 11 for fastening the outer peripheral wall 12 onto the respective spoke 11, and extends through the reinforcing ring 13. Specifically, the fastening member 21 has a head 211 disposed outwardly of the outer peripheral wall 12 and a stem 212 having a diameter smaller than that of the head 211. The stem 212 extends from the head 211 through the respective one of the openings 121 of the outer peripheral wall 12 and through the through hole 111 of the corresponding one of the spokes 111. The outer peripheral wall 12 has an annular outer peripheral wall 122 extending radially and outwardly. The gasket 22 is clamped between the head 211 of the fastening member 21 and the outer surface 12B of the outer peripheral wall 12 and is sleeved on the stem 212 of the fastening member 21. The washer 23 and the silicone ring 24 are disposed side-by-side in the one of the openings 121, and are sleeved on the stem 212 of the fastening member 21 to provide a seal between the outer peripheral wall 12 and the fastening member 21. In this embodiment, each of the openings 121 has a large dimension portion that is greater in dimension than the remaining portions of the opening 121 and that is for accommodating the washer 23 and the silicon ring 24 therein, but the present disclosure is not limited to this example. The nut 25 is disposed adjacent to and cooperates with the inward surface 112A of the hook portion 112 of the respective one of the spokes 11 to clamp the reinforcing ring 13 therebetween. That is to say, the reinforcing ring 13 is disposed between and abuts against the inward surface 112A of the hook portion 112 of each spoke 11 and the nut 25 of the corresponding fastening unit 2 and the stems 212 of the fastening members 21 extends through the reinforcing ring 13.

The sealing units 3 correspond respectively in position to the fastening units 2, and hence correspond respectively to the spokes 11. Since the structures of the sealing units 3 are identical, only one of the sealing units 3 and the corresponding one of the fastening units 2 are described in the following. The sealing unit 3 includes an outer sealing layer 31, a sealing ring 33, an inner sealing layer 32, a sealing sheet 34, and an adhesive 35. The outer sealing layer 31 is disposed on the outer surface 12B of the outer peripheral wall 12 and is adhered on an outer surface of the fastening unit 2 and the outer surface 12B of the outer peripheral wall 12 for covering the head 211 of the fastening member 21 and the gasket 22 of the fastening unit 2. The sealing ring 33 is sleeved on the stem 212 of the fastening member 21 and is clamped between the head 211 of the fastening member 21 and the gasket 22. The inner sealing layer 32 is adhered on the outer surface 12B of the outer peripheral wall 12 and is clamped between the outer peripheral wall 12 and the gasket 22. The sealing sheet 34 is disposed between and abuts against the outward surface 112B of the respective one of the spokes 11 and the inner surface 12A of the outer peripheral wall 12, and is sleeved on the stem 212 of the fastening member 21. The adhesive 35 is applied in each of the through holes 111 and sealingly connects the corresponding one of the spokes 11 to the fastening member 21. The stem 212 of the fastening member 21 sequentially extends through the sealing ring 33, the gasket 22, the inner sealing layer 32, the outer peripheral wall 12, the sealing sheet 34, the through hole 111 of the corresponding one of the spokes 11, the reinforcing ring 13 and into the nut 25 of the fastening unit 2 and threadedly engages the nut 25. By virtue of the abovementioned components of the sealing unit 3, a relatively good seal can be established among the fastening units 2, the spokes 11, and the outer peripheral wall 12.

In this embodiment, the outer sealing layer 31 and the inner sealing layer 32 are made of butyl rubber so that an airtight and watertight seal can be achieved. In addition, potential corrosion between any adjacent two of the reinforcing ring 13, the spokes 11, the outer peripheral wall 12, and the fastening units 2 can be alleviated. In this embodiment, the outer sealing layer 31 is also capable of conducting heat generated when a wheel using the wheel rim of the present disclosure is braked so as to dissipate heat from the wheel rim. It should be noted that in other embodiments, the outer sealing layers 31 of the sealing units 3 can be connected to one another to form a ring. In one embodiment, the sealing sheet 34 of each of the sealing units 3 is modified as a reinforcing adhesive (not shown) applied between the outward surface 112B of the corresponding one of the spokes 111 and the inner surface 12A of the outer peripheral wall 12.

To sum up, by virtue of the outer sealing layer 31, the sealing ring 33, the inner sealing layer 32, the sealing sheet 34 and the adhesive 35, a relatively good airtight and watertight seal is established. In addition, the components of the sealing units 3 prevent direct contact of any adjacent two of the reinforcing rings 13, the spokes 11, the outer peripheral wall 12, and the fastening units 2 to thereby reduce potential corrosion. Finally, the outer sealing layer 31 facilitates heat to be dissipated from the wheel rim.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment indicated with an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A wheel rim comprising:
a main body unit (1) including a hub (10) that is disposed at a center thereof, a plurality of spokes (11) that are angularly spaced apart from one another and that extend radially and outwardly from said hub (10), and an outer peripheral wall (12) that surrounds said spokes (11) and that has an inner surface (12A) and an outer surface (12B) which are radially opposite to each other, said wheel rim being **characterized by**:
a plurality of fastening units (2) mounted on said main body unit (1), angularly spaced apart from one another and corresponding respectively to said spokes (11) of said main body unit (1), each of said fastening units (2) including a fastening member (21) which extends through said outer peripheral wall (12) and into the respective one of said spokes (11) for fastening said outer peripheral wall (12) onto the respective one of said spokes (11), and which has a head (211) disposed outwardly of said outer peripheral wall (12), and a gasket (22) which is clamped between said head (211) of said fastening member (21) and said outer surface (12B) of said outer peripheral wall (12) and which is sleeved on said fastening member (21); and
a plurality of sealing units (3) corresponding respectively in position to said fastening units (2), each of said sealing units (3) including an outer sealing layer (31) that is adhered on an outer surface of said fastening member (21) of the corresponding one of said fastening units (2) and said outer surface (12B) of said outer peripheral wall (12) for covering said head (211) of said fastening member (21) and said gasket (22) of the corresponding one of said fastening units (2), and an inner sealing layer (32) that is adhered on said outer surface (12B) of said outer peripheral wall (12) and that is clamped between said outer peripheral wall (12) and said gasket (22) of the corresponding one of said fastening units (2).

2. The wheel rim as claimed in Claim 1, **characterized in that** said outer sealing layer (31) and said inner sealing layer (32) are made of butyl rubber.

3. The wheel rim as claimed in Claim 1, **characterized in that** each of said spokes (11) includes a hook portion (112) disposed adjacent to said outer peripheral wall (12), bent toward said hub (10), and having an inward surface (112A) and an outward surface (112B) that is radially opposite to said inward surface (112A), each of said fastening units (2) further including a nut (25) disposed adjacent to said inward surface (112A) of the respective one of said spokes (11), said fastening member (21) extending through said hook portion (112) of the corresponding one of said spokes (11) and threadedly engaging said nut (25).

4. The wheel rim as claimed in Claim 3, **characterized in that** said main body unit (1) further includes a reinforcing ring (13) which is disposed between and abuts against said inward surface (112A) of said hook portion (112) of each of said spokes (11) and said nut (25) of each of said fastening units (2), through which said fastening member (21) of a corresponding one of the fastening units (2) extends, and which is made of a material different from that of said spokes (11) and of said outer peripheral wall (12).

5. The wheel rim as claimed in Claim 3, **characterized in that** each of said sealing units (3) further includes a sealing member (34) disposed between and abutting against said outward surface (112B) of one of said spokes (11) that corresponds to the respective one of said fastening units (2), and said inner surface (12A) of said outer peripheral wall (12), and sleeved on said fastening member (21) of the corresponding one of said fastening units (2).

6. The wheel rim as claimed in any one of Claims 1 to 5, **characterized in that** said outer peripheral wall (12) of said main body unit (1) is formed with a plurality of openings (121) through which said fastening members (21) of said fastening units (2) respectively extend, each of said fastening units (2) further including a washer (23) and a silicone ring (24) that are disposed side-by-side in one of said openings (121) through which said fastening member (21) of said fastening unit (2) extends, and that are sleeved on said fastening member (21) of said fastening unit (2) to provide a seal between said outer peripheral wall (12) and said fastening member (21) .

7. The wheel rim as claimed in any one of Claims 1 to 6, further **characterized in that** said spokes (11) of said main body unit (1) are respectively formed with a plurality of through holes (111) through which said fastening members (21) of said fastening units (2) respectively extend, each of said sealing units (3) further including an adhesive (35) applied in each of said through holes (111) and sealingly connecting a respective one of said spokes (11) to the respective one of said fastening members (21).

8. The wheel rim as claimed in any one of Claims 1 to 7, further **characterized in that** each of said sealing units (3) further includes a sealing ring (33) sleeved on said fastening member (21) of the respective one of the fastening units (2) and clamped between said gasket (22) and said head (211) of said fastening member (21) of the respective one of the fastening units (2).
